# FASCICULE DE BREVET EUROPEEN

(11) **EP 4 441 954 B1**
(45) Date de publication et mention de la délivrance du brevet: **10.12.2025**
(21) Numéro de dépôt: 22822190.9
(22) Date de dépôt: 29.11.2022
(51) Int. Cl.: H04L 9/00, H04L 9/32, G06F 21/64, H04L 9/40

(54) **PROCÉDÉ DE TRAITEMENT DE PREUVE NUMÉRIQUE, SYSTÈME ET PROGRAMME CORRESPONDANT**
VERFAHREN ZUR VERARBEITUNG EINES DIGITALEN BEWEISES, SYSTEM UND ENTSPRECHENDES PROGRAMM
METHOD FOR PROCESSING A DIGITAL PROOF, SYSTEM AND CORRESPONDING PROGRAM

(30) Priorité: 30.11.2021 FR 2112761
(43) Date de publication de la demande: 09.10.2024
(73) Titulaire: Banks and Acquirers International Holding, 92150 Suresnes (FR)
(72) Inventeur: LEGER, Michel, 75116 Paris (FR)
(74) Mandataire: Germain Maureau
(86) Numéro de dépôt international: PCT/EP2022/083716
(87) Numéro de publication internationale: WO 2023/099496

(56) Documents cités:
- US-A1- 2019 332 586
- US-A1- 2020 280 546

## Description

### 1. Domaine

L'invention se rapporte à la transmission sécurisée d'information. L'invention se rapporte plus particulièrement à la transmission sécurisée d'information dans un contexte multipartite. Un objet de l'invention est de permettre une transmission d'une preuve numérique à un et un seul récipiendaire, sans que ce récipiendaire soit précisément connu au moment de l'établissement de la preuve numérique.

### 2. Art antérieur

Dans les réseaux, et plus particulièrement dans les réseaux de communication ou les réseaux de distribution, il est fréquent qu'une information, comme par exemple une preuve numérique d'accomplissement d'une tâche donnée, doive être transférée entre deux entités du réseau. C'est par exemple le cas dans une chaine de blocs fonctionnant selon le principe de preuve de participation. Ainsi, par exemple, pour qu'une transaction dans une chaine de bloc soit reconnue comme valide, elle doit être insérée dans la chaine de blocs. Les dispositifs de validation réalisent cette insertion. Dans la plupart des protocoles, ces dispositifs de validation reçoivent une récompense pour le faire. Pour que la chaine de blocs reste sécurisée, elle doit disposer d'un mécanisme pour empêcher un utilisateur ou un groupe malveillant de prendre en charge la majorité des validations et s'octroyer toutes les récompenses. Les mécanismes à base de preuve de participation parviennent à ce résultat en exigeant que les dispositifs de validation aient une certaine quantité de jetons de la chaine de blocs, obligeant les attaquants potentiels à acquérir une grande partie des jetons de la chaine de blocs pour pouvoir lancer une attaque. À contrario, la preuve de travail, un autre mécanisme de consensus couramment utilisé, utilise une validation des prouesses de calcul pour vérifier les transactions, obligeant un attaquant potentiel à acquérir une grande partie de la puissance de calcul du réseau de validation. Cela incite à consommer d'énormes quantités d'énergie pour pouvoir obtenir les résultats escomptés. De ce fait, le principe de preuve de travail perd de plus en plus d'intérêt, notamment avec les problématiques liées aux émissions de gaz à effet de serre résultant de ces quantités d'énergie consommées. Le principe de preuve de participation est considérablement plus économe en énergie. Cependant, ce principe de preuve de participation (ou de preuve d'intérêt) se heurte à celui de la détention nécessaire d'une certaine quantité de jetons pour pouvoir participer au travail à réaliser pour l'insertion de transaction et/ou la fermeture d'un bloc. Il est donc nécessaire de disposer d'une méthode de sélection d'un dispositif de validation pour que la répartition du travail entre les dispositifs de validation ne soit pas inégale. Certaines chaines de blocs utilisent une méthode de répartition aléatoire des dispositifs de validation qui seront responsables de la validation des blocs futurs dans la chaîne de blocs en tenant compte, par l'intermédiaire d'une formule, de la plus faible valeur de hachage et la taille de l'enjeu du dispositif de validation sélectionné. Les enjeux des comptes étant publics, chaque nœud peut prédire avec une précision raisonnable quel dispositif de validation va gagner le droit de forger un bloc additionnel sur la chaîne de blocs. D'autres chaines de blocs utilisent des méthodes de preuve d'enjeu en fonction de la vélocité. Dans un tel système de validation des blocs supplémentaires sur la chaîne de blocs, ce sont les dispositifs de validation qui réalisent le plus de transactions qui peuvent être aléatoirement choisis selon un processus défini pour valider l'addition de blocs sur la chaîne de blocs. Cette méthode écarte de fait les dispositifs de validation qui thésaurisent leurs jetons, ou bien les dispositifs de validation dont l'activité n'est pas suffisante indépendamment de leur volonté. Aucune des méthodes précédentes n'est réellement satisfaisante, car au final, des contraintes sont toujours présentes pour la sélection des dispositifs de validation et ces contraintes excluent nécessairement un certain nombre de dispositifs de validation, et ce pour de bonnes ou de mauvaises raisons.

Une telle situation d'exclusion se rencontre dans d'autres situations de la vie courante dans lesquelles une entité initiale sélectionne, parmi une pluralité d'entités destinatrices possibles, une ou plusieurs entités destinatrice pour la mise en œuvre d'une action particulière. Par exemple, dans le cadre de la répartition, par un dispositif (ou module) d'ordonnancement, de traitements à réaliser au sein de nœuds de traitement, une sélection des nœuds de traitement est réalisée par dispositif d'ordonnancement : cette situation est typique de l'informatique distribuée (comme l'informatique distribuée dans le cloud par exemple, dans laquelle un nœud de traitement est sélectionné pour exécuter tout ou partie d'une tâche informatique).

Ainsi, dans de tels systèmes généraux ou plusieurs entités sont impliquées dans un processus d'ordonnancement et/ou d'exécution ou de validation de transactions, il est nécessaire de proposer une technique de répartition qui ne dépende par uniquement d'un dispositif d'ordonnancement (également appelé composeur par la suite) au bénéfice de quelques dispositifs de validation (également appelés destinataires par la suite), le tout en assurant la sécurité de la transmission, vis-à-vis tant de dispositif d'ordonnancement que du dispositif de validation.

### 3. Résumé

La technique conçue par les inventeurs a été testée pour répondre au moins en partie aux problématiques posées par l'art antérieur. Plus particulièrement, la technique décrite a été conçue pour limiter les échanges tout en permettant à un destinataire d'une preuve numérique de prendre possession de cette preuve, par l'intermédiaire d'un tiers (un convoyeur), tout en assurant pour l'émetteur de la preuve numérique (le composeur), que celle-ci ne puisse être utilisée, une fois émise, que par un seul destinataire éventuellement parmi une liste prédéterminée de destinataires donnés.

Dans un système de distribution de preuve numériques, notamment de preuves de réalisation de travail ou d'actions particulières, à partir d'un composeur de preuves numériques, s'assurer que les preuves numériques sont aléatoirement ou pseudo-aléatoirement réparties entre des destinataires de preuves numériques, sans que le composeur ne prenne partie dans le choix final des destinataires de la preuve numérique. Il est ainsi possible de s'assurer que les preuves numériques sont distribuées indépendamment de la volonté du composeur de preuves numériques. Par ailleurs, même s'il existe un seul destinataire des preuves numériques, l'utilisation des convoyeurs, indépendant du composeur de preuves numériques, permet de s'assurer que les preuves sont distribuées au destinataire aléatoirement ou pseudo-aléatoirement dans le temps (c'est-à-dire que les preuves numériques ne sont pas distribuées les unes à la suite des autres). L'avantage de ce type de distribution est que les destinataires et les convoyeurs, qui, du point de vue du composeur sont des entités peu fiables et peu sécurisées, sont globalement tributaires les uns des autres pour la distribution des preuves numériques.

Ainsi, il est proposé un procédé de traitement d'une preuve numérique de validation d'une transaction électronique, procédé mis en œuvre au sein d'un système comprenant un dispositif électronique de construction de la preuve numérique, appelé composeur, ladite preuve numérique étant destinée à être transmise à un dispositif électronique de traitement de la preuve numérique, appelé destinataire appartenant à un ensemble de destinataires, le destinataire de traitement de la preuve numérique étant sélectionné par une entité tierce nommée convoyeur, le procédé comprenant les étapes suivantes :
- Une étape de construction de la preuve numérique, par le composeur, à l'issue d'une étape d'exécution de la transaction électronique par le composeur, ladite preuve numérique comprenant au moins un certificat numérique qui comprend une liste d'identifiants d'au moins un sous ensemble de l'ensemble de destinataires ;
- Une étape de transmission, au convoyeur, de ladite preuve numérique ;
- Une étape de sélection, par le convoyeur, d'un destinataire courant dont l'identifiant appartient à la liste d'identifiants dudit au moins un sous ensemble de l'ensemble de destinataires ; et
- Une étape de validation, par le destinataire courant, de la preuve numérique remise par le convoyeur.

Ainsi, d'une part la distribution de preuve numérique à un destinataire reste sécurisée tout en de s'abstraire du caractère arbitraire de la distribution.

Selon une caractéristique particulière, l'étape de construction de la preuve numérique, par le composeur, comprend :
- une étape de réception, par un module d'exécution sécurisé du composeur, d'un identifiant du convoyeur ;
- une étape d'obtention, par le module d'exécution sécurisé du composeur, à partir d'une base de données, d'un profil associé audit identifiant ;
- une étape de détermination, à partir dudit profil, d'un ensemble d'identifiants de destinataires auxquels la preuve numérique est potentiellement destinée ;
- une étape de construction, par le module d'exécution sécurisé du composeur, d'un certificat numérique comprenant l'identifiant de l'utilisateur, l'ensemble d'identifiants des destinataires, un nombre aléatoire, ledit certificat numérique étant chiffré à l'aide de la clé privée du module d'exécution sécurisé du composeur ;
- une étape de construction de la preuve numérique, comprenant le certificat numérique et comprenant notamment l'identifiant dudit convoyeur, l'ensemble d'identifiants des destinataires du certificat numérique et l'identifiant du composeur ;
- une étape de transmission de la preuve numérique à destination du convoyeur ;
- une étape d'insertion de la preuve numérique au sein d'une base de données comprenant des enregistrements de preuves numériques.

Selon une caractéristique particulière, l'étape de construction du certificat numérique CertN comprend une étape de chiffrement de l'ensemble des d'identifiants des destinataires à l'aide de la clé privée du module d'exécution sécurisé du composeur.

Selon une caractéristique particulière, caractérisé en ce que le certificat numérique CertN comprend en outre une date limite de validité.

Selon une caractéristique particulière, caractérisé en ce que le certificat numérique CertN est signé à l'aide de la clé publique du module d'exécution sécurisé du composeur.

Selon une caractéristique particulière, l'étape de validation, par le destinataire courant, de la preuve numérique remise par le convoyeur, comprend :
- une étape de réception, en provenance du convoyeur, d'un identifiant de convoyeur ;
- une étape de réception, en provenance du convoyeur, du fichier de preuve numérique ;
- une étape de recherche, par le destinataire courant, au sein du fichier de preuve numérique, d'un identifiant du destinataire courant ; et une vérification de la conformité de cet identifiant de destinataire courant avec un identifiant de référence du destinataire courant, conduisant, en cas de validité de la vérification, à une prise en charge du fichier de preuve numérique ; en cas de vérification erronée, une étape de refus de la preuve numérique et une terminaison du processus ;
- une étape de transmission, par le destinataire courant, au composeur ComP, d'un identifiant du certificat numérique ;
- une étape de réception d'une donnée d'interblocage ;
- une étape de validation des données contenues dans le fichier de preuve numérique en fonction des matériels cryptographiques à disposition du destinataire ; et
- une étape de suppression de la preuve numérique après validation.

Selon une caractéristique particulière, l'étape de suppression de la preuve numérique comprend :
- une étape de transmission de la validation de la preuve numérique par le destinataire ;
- et une étape de marquage, par le composeur, au sein de la base de données de la validation effectuée par le destinataire courant, entrainant une impossibilité d'utilisation nouvelle de la preuve numérique par le destinataire ou un autre destinataire.

Selon un autre aspect, l'invention se rapporte également à un système de traitement d'une preuve numérique de validation d'une transaction électronique, comprenant un dispositif électronique de construction de la preuve numérique, appelé composeur, un dispositif électronique de traitement de la preuve numérique, appelé destinataire appartenant à un ensemble de destinataires, et une entité tierce nommée convoyeur, un ladite preuve numérique étant destinée à être transmise au destinataire par le convoyeur. Un tel système comprend :
- Des moyens de construction de la preuve numérique, par le composeur, à l'issue d'une d'exécution de la transaction électronique par le composeur, ladite preuve numérique comprenant au moins un certificat numérique qui comprend une liste d'identifiants d'au moins un sous ensemble de l'ensemble de destinataires ;
- Des moyens de transmission, par le composeur, au convoyeur, de ladite preuve numérique ;
- Des moyens de sélection, par le convoyeur, d'un destinataire courant dont l'identifiant appartient à la liste d'identifiants dudit au moins un sous ensemble de l'ensemble de destinataires ; et
- Des moyens de validation, par le destinataire courant, de la preuve numérique remise par le convoyeur.

Selon une implémentation préférée, les différentes étapes des procédés selon la présente divulgation sont mises en œuvre par un ou plusieurs logiciels ou programmes d'ordinateur, comprenant des instructions logicielles destinées à être exécutées par un processeur de données d'un terminal d'exécution selon la présente technique et étant conçu pour commander l'exécution des différentes étapes des procédés, mis en œuvre au niveau d'un terminal de communication, d'un serveur distant et/ou d'une chaîne de blocs, dans le cadre d'une répartition des traitements à effectuer et déterminés par un code source scripté ou un code compilé.

En conséquence, la présente technique vise aussi des programmes, susceptibles d'être exécutés par un ordinateur ou par un processeur de données, ces programmes comportant des instructions pour commander l'exécution des étapes des procédés tel que mentionnés ci-dessus.

Un programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

La présente technique vise aussi un support d'informations lisible par un processeur de données, et comportant des instructions d'un programme tel que mentionné ci-dessus.

Le support d'informations peut être n'importe quelle entité ou terminal capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un support mobile (carte mémoire) ou un disque dur ou un SSD.

D'autre part, le support d'informations peut être un support transmissible tel qu'un signal électrique ou optique, qui peut être acheminé via un câble électrique ou optique, par radio ou par d'autres moyens. Le programme selon la présente technique peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, la présente technique est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonctions, selon ce qui est décrit ci-dessous pour le module concerné. Un tel composant logiciel est exécuté par un processeur de données d'une entité physique (terminal, serveur, passerelle, set-top-box, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en œuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en œuvre ses propres modules logiciels.

Les différents modes de réalisation mentionnés ci-dessus sont combinables entre eux pour la mise en œuvre de la présente technique.

### 4. Dessins

D'autres buts, caractéristiques et avantages de l'invention apparaîtront plus clairement à la lecture de la description suivante, donnée à titre de simple exemple illustratif, et non limitatif, en relation avec les figures, parmi lesquelles :
- [Fig.1] représente le procédé de construction de preuve numérique ;
- [Fig.2] représente le procédé de distribution et de destruction de preuve numérique ;
- [Fig.3] représente une architecture physique simplifiée d'un système dans lequel les procédés précédemment décrits peuvent être mis en œuvre.
- [Fig.4] représente une architecture physique simplifiée d'un dispositif serveur composeur de preuve numérique.
- [Fig.5] représente une architecture physique simplifiée d'une entité convoyeur de preuve numérique.
- [Fig.6] représente une architecture physique simplifiée d'un dispositif destinataire de preuve numérique.

### 5. Description

### 5.1. Rappels du principe

Le principe général de l'invention, dans un système de distribution, consiste en une construction d'une preuve numérique multidestinataires (cette preuve étant elle-même à étant à usage unique, par un seul destinataire) ainsi qu'en la gestion de la distribution (et de la destruction) de cette preuve numérique une fois qu'elle a été distribuée à un destinataire par un convoyeur. Un objet de la technique est de pouvoir disposer d'une preuve numérique qui peut potentiellement être convoyée à plusieurs destinataires sans toutefois que cette preuve numérique ne puisse être utilisée par plus d'un seul destinataire, ce destinataire étant choisi par un convoyeur qui transporte la preuve numérique (et non pas par le composeur). En d'autres termes, au moment de l'établissement de la preuve numérique, le composeur de cette preuve détermine un certain nombre de destinataires possibles de cette preuve numérique, sans savoir quel est le destinataire réel. Le destinataire effectif étant déterminé par la seule action d'un convoyeur. La situation, plus particulièrement est qu'il existe plusieurs convoyeurs et plusieurs destinataires. Il n'y a pas qu'un seul convoyeur au sein du système et le convoyeur en charge de la distribution de la preuve numérique est celui avec lequel le composeur a effectué une action permettant de créer tout ou partie de la preuve numérique qui doit être convoyée à un destinataire.

Concrètement, par exemple, on se place dans le cas d'un réseau, dans lequel un serveur (le composeur) met en œuvre une action (par exemple une action d'exécution d'une transaction, par exemple destinée à être insérée au sein d'une chaine de blocs ou au sein d'un registre centralisé) et transmet cette transaction (ou un résultat de cette transaction) sous la forme d'une preuve numérique (DTC, certificat numérique de transaction) à un nœud du réseau (le convoyeur) auquel le serveur est connecté, afin que cette preuve numérique soit délivrée à un destinataire (par exemple un autre serveur) pour être validée (i.e. insérée dans un registre et détruite après validation). Dans cet exemple de situation, le serveur a effectué un travail (i.e. la mise en œuvre de la transaction, éventuellement en lien avec le nœud du réseau lui-même, lorsque c'est ce dernier qui lui demande de réaliser le travail en question), souhaite apporter la preuve de ce travail à un destinataire parmi une liste de destinataires possible par l'intermédiaire du convoyeur (du nœud du réseau). Dans un autre exemple, une entité physique (par exemple une entreprise agissant comme composeur) qui met en œuvre une prestation pour le compte d'un client (le convoyeur) souhaite apporter la preuve de la mise en œuvre de la prestation à une autre entreprise (agissant comme destinataire) de la mise en œuvre de la prestation, par l'intermédiaire du client-convoyeur, pour permettre au destinataire la mise en œuvre d'un service subséquent pour le compte du convoyeur. Dans ce cadre, l'invention permet de gérer des transmissions de centaines de milliers de preuves numériques à destination d'une grande quantité de destinataires tout en s'assurant que le contenu de ces preuves numérique ne puisse pas être altéré par les convoyeurs dont on suppose qu'il peuvent être infectés par des logiciels malveillants, par exemple dans un objectif de gain de convoyage multiples pour une seule et même preuve numérique.

D'un point de vue sécurité, la situation dans laquelle on se place, comme cela a été indiqué précédemment, est une situation dans laquelle le composeur (également nommé A), souhaite communiquer une preuve numérique à un destinataire (B), parmi un ensemble de destinataires (un ensemble de Bs), sans toutefois que le composeur (A) ne sache à l'avance à quel destinataire (B) cette preuve numérique va être distribuée. Par ailleurs, dans la situation décrite, le composeur (A) n'est pas l'entité qui distribue la preuve numérique. En effet, cette preuve numérique est distribuée par un convoyeur (C) et le convoyeur (C) choisit seul le destinataire de la preuve numérique, parmi un sous ensemble de destinataires : le convoyeur (C) choisi le destinataire (B) en fonction de critères qui lui sont propres et notamment en fonction par exemple de l'économie de distribution (i.e. de la facilité avec laquelle la distribution peut être réalisée) ou encore d'une éventuelle rétribution qu'il perçoit (par exemple pour son action de distribution) de la part de chaque destinataire ou d'autres critères, comme le temps dont dispose le convoyeur. Comme exposé précédemment, cependant, il est permis de douter de l'honnêteté du convoyeur (C), et notamment de sa volonté de ne distribuer la preuve numérique qu'il reçoit de la part du composeur (A) qu'à un seul destinataire (par exemple dans l'objectif de percevoir plusieurs éventuelles rétributions). On note que la rétribution peut être la même quel que soit le destinataire et être décidée par le composeur, auquel cas le convoyeur fait son choix de distribution du fichier de la preuve numérique selon d'autres critères. Le schéma dans lequel on se place est particulier, dans la mesure où le composeur pourrait directement transmettre la preuve numérique à un destinataire qu'il choisit lui-même. Cependant, dans un objectif de circulation de la distribution des preuves numériques, auprès des destinataires, sans que le composeur ne joue un rôle central dans cette distribution (ce qui est l'un des objectifs), on laisse au convoyeur une liberté de choix de destinataire parmi un sous ensemble de destinataire.

Dans cet objectif, le procédé décrit permet de se prémunir d'une utilisation frauduleuse de la preuve numérique par le convoyeur, par exemple pour en retirer de multiples avantages auprès de plusieurs destinataires. Le procédé décrit permet également de se prémunir d'une utilisation frauduleuse de la preuve numérique par le destinataire, par exemple en utilisant plusieurs fois une seule et même preuve numérique. La technique décrite dans la présente trouve une application par exemple dans le cadre d'un processus d'octroi d'un bon, sous la forme d'une preuve numérique, par une entreprise, à destination d'un client, ledit bon étant utilisable auprès d'une pluralité d'entreprises ou d'établissements publics différents (par exemple sous la forme d'une déduction d'un montant de transaction ultérieur). La technique décrite trouve de manière plus générale une application dans un processus de validation de l'exécution d'un travail ou d'une tâche donnée (par exemple dans le cadre d'un traitement de transaction au sein d'une chaine de blocs), par un fournisseur de services, la validation de l'exécution de la tâche pouvant être faite par plusieurs destinataires différents de ce cette tâche ou de ce travail (cas d'un travail coopératif au sien d'un espace numérique par exemple), mais dans lequel le bénéfice ne peut être octroyé que par un seul des destinataires de la tâche en question. Il est dans ce cas important que cette preuve numérique ne soit traitée qu'une et une seule fois.

Ainsi, le composeur et les destinataires disposent de matériels de chiffrement asymétriques, de type couples de clés privées/clés publiques et qu'ils sont également munis d'identifiants permettant de les distinguer. Également le composeur dispose d'une liste de destinataires auprès desquels il lui est possible de transmettre (par l'intermédiaire d'un convoyeur) la preuve numérique qu'il construit. Le convoyeur, quant à lui, dispose également d'un identifiant, dont le composeur a connaissance. Le convoyeur est, dans la présente, une entité physique (une personne physique, un utilisateur, un équipement de réseau) qui reçoit la preuve numérique de la part du composeur et se déplace physiquement chez l'un des destinataires pour pouvoir déposer la preuve numérique qu'il à reçu de la part du composeur, ou encore que le convoyeur transmette directement ou indirectement la preuve numérique au destinataire (par l'intermédiaire d'un ou de plusieurs nœuds relais, i.e. enchainement de convoyeurs). Comme cela est explicité par la suite, la preuve numérique peut matériellement se présenter sous la forme d'un document (imprimé par le composeur et donné au destinataire) ou bien encore d'un fichier, numérique, enregistré au sein d'un dispositif de communication du convoyeur, ce fichier étant transmis ou fourni, directement ou indirectement, par le composeur au destinataire.

La technique comprend deux phases : une phase au cours de laquelle le composeur créé la preuve numérique et une phase au cours de laquelle cette preuve numérique est déposée chez un destinataire parmi une liste de destinataires. La première phase débute par l'obtention de l'identifiant du convoyeur. En fonction de la situation, le composeur sélectionne, parmi un ensemble de destinataires à sa disposition, un sous ensemble de destinataires auquel il souhaite que la preuve numérique soit transmise. Cette sélection peut être réalisée en fonction de l'identifiant du convoyeur afin de limiter les risques de fraude par exemple. On part en effet du principe que le convoyeur peut être de mauvaise foi et qu'il tentera de remettre la preuve numérique à plusieurs destinataires différents. L'étape de sélection du sous ensemble de destinataires permet donc de limiter les risques, par exemple lorsque de précédentes tentatives de distribution multiples de preuves uniques ont été enregistrées. Ainsi, au cours de la première phase, le composeur obtient un identifiant du convoyeur puis, sur la base de cet identifiant, il détermine une liste de destinataires. Le composeur utilise sa clé publique pour chiffrer une donnée aléatoire initiale dont il est seul à avoir connaissance, délivrant une donnée aléatoire chiffrée (de cette façon seul le composeur peut déchiffrer cette donnée à l'aide de sa propre clé privée dont il est le seul dépositaire). Le composeur forme un certificat numérique, à partir de l'identifiant du convoyeur, des identifiants des destinataires qu'il présélectionne, de la preuve de travail réalisée (i.e. d'une chaine de caractère représentant la preuve de travail, tel que le hash d'un bloc de chaine de blocs, ou bien tel qu'une empreinte de transaction) et de la donnée aléatoire chiffrée. Ce certificat numérique est signé à l'aide de la clé publique du composeur (de cette façon le destinataire peut vérifier la validité du certificat numérique à l'aide de la clé publique du composeur). Il insère dans un fichier de preuve numérique qu'il transmet au convoyeur.

Dans la deuxième phase, le convoyeur transporte la preuve numérique en sa possession à un destinataire. Le destinataire reçoit la preuve numérique et en extrait le certificat numérique. Sur la base de ce certificat numérique, il extrait, de celui-ci, la liste des identifiants des destinataires et la signature effectuée par le composeur. S'il constate que la liste des destinataires, extraite du certificat numérique, ne comprend pas son identifiant, le destinataire rejette la preuve numérique reçue de la part du convoyeur. S'il constate que la liste des destinataires, extraite du certificat numérique comprend son identifiant, il effectue une vérification de la validité du certificat reçu en utilisant sa clé privée et la clé publique du composeur, clé dont il a pris possession préalablement à la mise en œuvre du procédé de la présente, par exemple auprès du composeur lui-même ou auprès d'un tiers de confiance ou d'un service idoine. Lorsque le certificat est valide, il fournit une preuve de dépôt au convoyeur et informe le composeur de la bonne réception de la preuve numérique.

Par ailleurs, dans le cadre de la présente, les rôles attribués au composeur et aux destinataires sont interchangeables. À un moment donné, pour une opération donnée, une entité peut jouer le rôle de composeur, puis pour une autre opération donnée, jouer le rôle de destinataire. De même, en fonction des conditions de mise en œuvre, le destinataire n'est pas nécessairement obligé de se rendre chez un destinataire, mais peut utiliser un réseau de communication pour délivrer la preuve numérique au destinataire de son choix.

### 5.2. Procédé de construction de la preuve numérique

Comme indiqué précédemment, un objectif de l'invention est de permettra une distribution d'une preuve numérique en utilisant les services d'un convoyeur, auquel la preuve numérique est remise pour distribution. Le convoyeur reçoit la preuve numérique à l'issue d'une action qu'il mène en conjonction avec le composeur (i.e. le composeur peut se présenter sous la forme de n'importe quelle entité, par exemple un fournisseur de biens ou de services, par exemple un commerçant ou une grande enseigne de commerce physique). Le convoyeur peut par exemple prendre possession, contre règlement d'un prix, d'un ou plusieurs biens ou services auprès du composeur, et effectuer le paiement en échange de ces biens ou de ces services. À l'issue du règlement, le procédé de construction de preuve numérique est mis en œuvre par un module d'exécution sécurisé (MExSec) du composeur (Comp). Le procédé décrit ci-dessous, permet au composeur de transmettre au convoyeur, une preuve numérique (qui peut par exemple être une preuve numérique du règlement effectué), cette preuve numérique étant infalsifiable par le convoyeur, qui peut ensuite la déposer chez un destinataire.

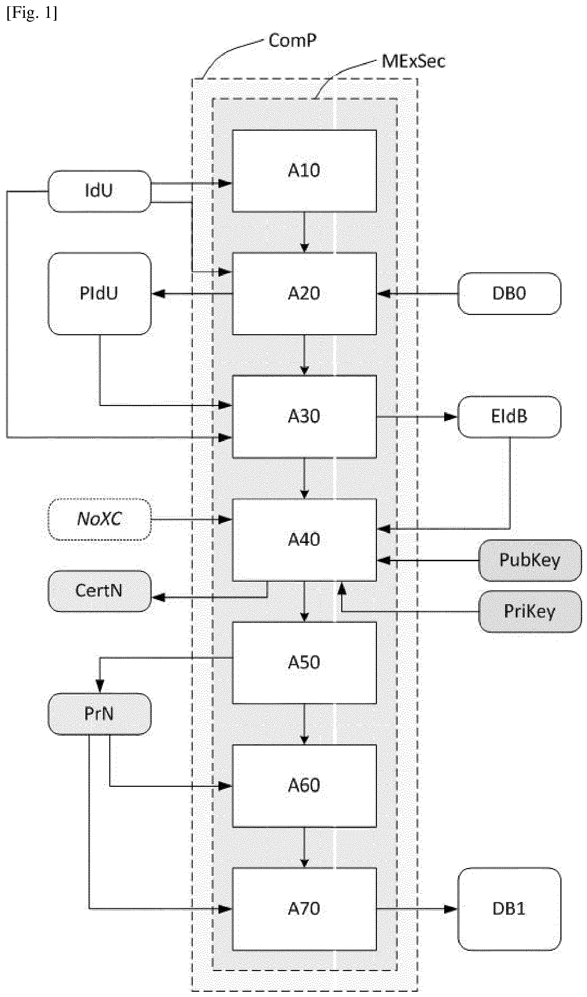

Le procédé de construction de la preuve numérique (PrN) comprenant, en relation avec la [Fig.1] :
- une étape de réception (A10), par le module d'exécution sécurisé du composeur, d'un identifiant (IdU) du convoyeur ;
- une étape d'obtention (A20), par le module d'exécution sécurisé du composeur, à partir d'une base de données (DB0), d'un profil (PIdU) associé audit identifiant (IdU) ;
- une étape de détermination (A30), à partir dudit profil, d'un ensemble d'identifiants (EIdB) de destinataires auxquels la preuve numérique est destinée ;
- une étape de construction (A40), par le module d'exécution sécurisé du composeur, d'un certificat numérique (CertN) comprenant l'identifiant (IdU), l'ensemble d'identifiants (EIdB) des destinataires (chacun étant chiffré à l'aide de la clé privée du module d'exécution sécurisé du composeur), un nombre aléatoire chiffré (NoXC) à l'aide de la clé privée du module d'exécution sécurisé du composeur et une date limite de validité (optionnelle), ledit certificat numérique (CertN) étant chiffré à l'aide de la clé privée (PriKey) du module d'exécution sécurisé du composeur et optionnellement signé à l'aide de sa clé publique (PubKey) ;
- une étape de construction (A50) de la preuve numérique (PrN), comprenant le certificat numérique (CertN) et comprenant notamment l'identifiant dudit convoyeur, l'ensemble d'identifiants des destinataires du certificat numérique et l'identifiant du composeur ;
- une étape de transmission (A60) de la preuve numérique (PrN) à destination du convoyeur ;
- une étape d'insertion (A70) de la preuve numérique au sein d'une base de données (DB1) comprenant des enregistrements de preuves numériques.

En fonction des conditions de mise en œuvre opérationnelles, il est prévu que pour chaque destinataire, le composeur dispose d'un couple clé privée/clé publique différent. Plus particulièrement, pour chaque destinataire enregistré, le composeur dispose d'une paire {clé publique/clés privée} associée à ce destinataire, en plus d'un couple clé privée/clé publique à usage général entre tous les destinataires. Dans cette situation, l'ensembles dés destinataires dispose de la clé publique à usage général du composeur. De plus individuellement, chaque destinataire dispose de la clé publique du composeur qui lui est spécifiquement attachée. Un destinataire X, cependant, ne dispose pas de la clé publique du composeur à usage du destinataire Y. Ainsi, les identifiants des destinataires qui sont chiffrés au sein du certificat numérique, le sont à l'aide de la clé privée du composeur associée à chaque destinataire potentiel. En d'autres termes, selon la présente technique un destinataire X ne peut pas, à l'aide de la clé publique du composeur qui lui est dédiée, déchiffrer l'identifiant d'un destinataire Y au sein du certificat numérique. Cette technique participe ainsi au cloisonnement des destinataires entre eux par le composeur et permet de s'assurer que le convoyeur n'est pas en mesure de déchiffrer les données de vérification qui sont détenues dans la preuve numérique. Cela permet d'augmenter la sécurité de tra transmission de la preuve numérique tout en assurant l'indépendance du convoyeur. De manière identique, dans un exemple de réalisation, le composeur utilise alors sa clé privée destinée à chaque destinataire (et non pas sa clé publique générale) pour chiffrer une donnée aléatoire initiale dont il est seul à avoir connaissance, délivrant une donnée aléatoire chiffrée par destinataire potentiel, cette donnée aléatoire chiffrée destinée à chaque destinataire étant insérée dans le certificat numérique. L'avantage ici, est double : lors du contrôle de la preuve numérique par le composeur, une fois que le destinataire veut prouver qu'il a lui-même reçu la preuve numérique, le destinataire doit présenter la donnée aléatoire chiffrée qui correspond à son identifiant, et donc doit être en mesure d'identifier celle-ci.

### 5.3. Procédé de distribution et de destruction de preuve numérique

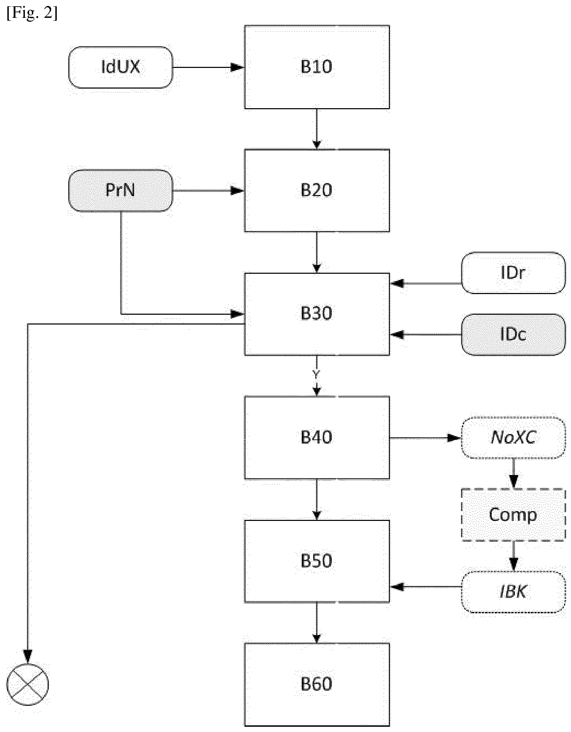

Comme indiqué précédemment, le procédé de la technique décrite comprend une phase de distribution de la preuve numérique acquise par le convoyeur à un destinataire de son choix. Une telle distribution est organisée pour permettre au convoyeur d'être récompensé, de son travail de distribution, en fonction du destinataire. Quoi qu'il en soit, le convoyeur présente, au destinataire qu'il sélectionne, la preuve numérique qu'il détient. Du point de vue du destinataire courant, choisi par le convoyeur, le procédé de distribution de la preuve numérique comprend, en relation avec la [Fig.2] :
- Une étape de réception (B10), en provenance du convoyeur, d'un identifiant de convoyeur (IdUX) ; il ne s'agit pas nécessairement de l'identifiant fournit au composeur. Il peut s'agir d'un identifiant propre au destinataire ;
- Une étape de réception (B20), en provenance du convoyeur, du fichier de preuve numérique (PrN) ; il peut s'agir d'une réception par voie électronique, par exemple la transmission, par le terminal de communication du convoyeur, d'un fichier contenant la preuve numérique ; cette transmission du fichier de données comprenant la preuve numérique peut comprendre la transmission par un réseau de communication ou bien la transmission physique, par l'intermédiaire d'une interface de communication sans contact, du fichier de preuve numérique ; dans un autre exemple de réalisation, la transmission peut consister également en un scan d'un code présent sur un document imprimé de preuve numérique ;
- Une étape de recherche (B30), par le destinataire courant, au sein du fichier de preuve numérique, d'un identifiant du destinataire courant (IDc) ; et une vérification de la conformité de cet identifiant de destinataire courant (IDc) avec un identifiant de référence (IDr) du destinataire courant, conduisant, en cas de validité de la vérification (Y), à une prise en charge du fichier de preuve numérique (PrN) ; en cas de vérification erronée (N), une étape de refus de la preuve numérique et une terminaison du processus ;
- Une étape de transmission (B40), par le destinataire courant, (soit au composeur ComP soit à un service tiers) d'un identifiant du certificat numérique, cet identifiant de certificat numérique pouvant se présenter sous la forme de la signature accompagnant le certificat numérique, ou encore sous la forme de la donnée aléatoire chiffrée ;
- Une étape de réception (B50), (soit en provenance du composeur soit du service tiers), d'une donnée d'interblocage (IBK) ; cette donnée d'interblocage permet de signifier au destinataire courant que la preuve numérique qu'il traite est considérée comme temporairement bloquée, tant que ce destinataire courant ne l'a pas traité ;
- Une étape de validation (B60) des données contenues dans le fichier de preuve numérique en fonction des matériels cryptographiques à disposition du destinataire (et/ou du composeur ou du service tiers) et une étape de suppression de la preuve numérique après validation, comprenant une étape de transmission de la validation de la preuve numérique par le destinataire (au composeur ou au service tiers) et une étape de marquage, au sein de la base de données (DB1) de la validation effectuée par le destinataire courant, entrainant une impossibilité d'utilisation nouvelle de la preuve numérique par le destinataire ou un autre destinataire.

Ces étapes constituent les principales étapes de la deuxième phase de la prise en charge de la preuve numérique par un destinataire. L'étape de validation peut comprendre, pour le composeur ou le service tiers, une transmission d'une information représentative d'une destruction de preuve numérique au destinataire, indiquant à ce dernier la finalisation de la livraison de la preuve numérique. La donnée d'interblocage passe alors du statut de temporaire à définitive. Le destinataire courant conserve alors en son sein, une empreinte de la preuve numérique tout comme le composeur. Le composeur, comme cela est décrit par la suite, conserve également une empreinte de la preuve numérique, et associe cette empreinte au destinataire.

Selon la présente technique, la validation de la preuve numérique comprend notamment la vérification, quand ce champ optionnel existe, que la date de validité de la preuve est supérieure à la date à laquelle la preuve numérique est transmise par le convoyeur au destinataire. La validation, par le destinataire, peut également comprendre la vérification d'autres données insérées dans le certificat ou dans la preuve comme par exemple la recherche, au sein d'une chaine de blocs, d'un identifiant de transaction relativement à un travail d'insertion de transaction effectué par le composeur et objet de la preuve numérique ; il peut également s'agir d'une transaction effectuée par le composeur en dehors d'une chaine de blocs. Il peut également s'agir de déterminer la validité d'une donnée présentée dans la preuve numérique afin que la rétribution du convoyeur puisse être fournie par le destinataire. Le destinataire peut également requérir cette rétribution directement auprès du composeur, en fonction des conditions de mise en œuvre opérationnelles, notamment de validation de la preuve numérique.

### 5.4. Description du système de mise en œuvre dans un exemple de réalisation

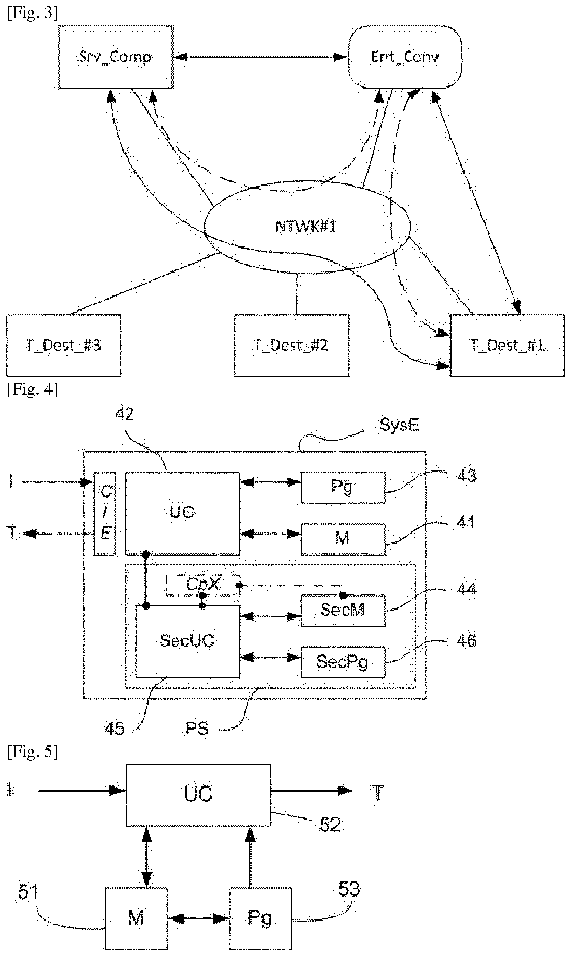

Dans un système de distribution, tel que présenté en [Fig.3], au moins un composeur (Srv_Comp), un seul étant représenté sur la [Fig.3]. Un tel système comprend également au moins une entité ayant la fonction de convoyeur (Ent_conv), une seule entité étant représentée sur la [Fig.3]. En fonction des modes de mise en œuvre, le convoyeur (Ent_conv) et le composeur (Srv_Comp) sont en mesure d'échanger des données en mode direct, échanges qui sont représentés par la ligne en trait plein et/ou sont en mesure d'échanger directement des données en mode indirect, par l'intermédiaire d'u réseau de communication (NTWK#1), échanges qui sont représentés par la ligne discontinue. Comme indiqué précédemment, le composeur (Srv_Comp) se présente sous la forme d'un serveur, sécurisé, à même de produire les preuves numériques qui doivent être distribuées. Un tel système comprend également au moins une pluralité d'entités destinataires (T_Dest_#1,...), trois entités étant représentées sur la [Fig.3]. En fonction des modes de mise en œuvre, le composeur (Srv_Comp) et le destinataire (T_Dest_#1,...), sont en mesure d'échanger des données en mode direct, échanges qui sont représentés par la ligne en trait plein et/ou sont en mesure d'échanger directement des données en mode indirect, par l'intermédiaire d'u réseau de communication (NTWK#1), échanges qui sont représentés par la ligne discontinue. Le composeur (Srv_Comp) et le destinataire (T_Dest_#1,...), sont en mesure d'échanger des données en mode direct, échanges qui sont représentés par la ligne en trait plein.

On présente, en relation avec la [Fig.4], une architecture simplifiée d'un dispositif électronique serveur (Srv_Comp) apte à effectuer le traitement de preuve numérique tel que présenté précédemment. Un dispositif électronique serveur (Srv_Comp) comprend un premier module électronique comprenant une mémoire 41, une unité de traitement 42 équipée par exemple d'un microprocesseur, et pilotée par un programme d'ordinateur 43. Le dispositif électronique comprend également un deuxième module électronique comprenant une mémoire sécurisée 44, qui peut être fusionnée avec la mémoire 41 (comme indiqué en pointillés, dans ce cas la mémoire 41 est une mémoire sécurisée), une unité de traitement sécurisée 45 équipée par exemple d'un microprocesseur sécurisée et de mesure physiques de protection (protection physique autour de la puce, par treillis, vias, etc. et protection sur les interfaces de transmission de données), et pilotée par un programme d'ordinateur 46 spécifiquement dédié à cette unité de traitement sécurisée 45, ce programme d'ordinateur 46 mettant en œuvre toute ou partie du procédé de traitement de preuve numérique tel que précédemment décrit. Le groupe composé de l'unité de traitement sécurisée 45, de la mémoire sécurisée 44 et du programme d'ordinateur dédié 46 constitue le module sécurisé (PS) du dispositif électronique serveur (Srv_Comp). Dans au moins un mode de réalisation, la présente technique est mise en œuvre sous la forme d'un ensemble de programmes installé en partie ou en totalité sur cette portion sécurisée du terminal de traitement de transaction. Dans au moins un autre mode de réalisation, la présente technique est mise en œuvre sous la forme d'un composant dédié (CpX) pouvant traiter des données des unités de traitement et installé en partie ou en totalité sur la portion sécurisée du dispositif de traitement. Par ailleurs, le dispositif électronique serveur (Srv_Comp) comprend également des moyens de communication (CIE) se présentant par exemple sous la forme de composants réseaux (WiFi, 3G/4G/5G, filaire) qui permettent au dispositif de recevoir des données (I) en provenance d'entités connectées à un ou plusieurs réseaux de communication et des transmettre des données traitées (T) à de telles entités.

Un tel dispositif comprend, en fonction des modes de réalisation :
- Des moyens de construction de la preuve numérique, par le composeur, à l'issue d'une étape d'exécution de la transaction électronique par le composeur, ladite preuve numérique comprenant au moins un certificat numérique qui comprend une liste d'identifiants d'au moins un sous ensemble de l'ensemble de destinataires ;
- Des moyens de transmission, au convoyeur, de ladite preuve numérique.

Comme explicité précédemment, ces moyens sont mis en œuvre par l'intermédiaire de modules et/ou de composants, par exemple sécurisés. Ils permettent ainsi d'assurer la sécurité des transactions réalisées tout en garantissant une plus grande maintenabilité du dispositif.

On présente, en relation avec la [Fig.5], une architecture simplifiée d'un dispositif convoyeur de preuve numérique apte à mettre en œuvre la méthode de traitement de preuve numérique telle que présentée précédemment. Un tel dispositif convoyeur de preuve numérique comprend une mémoire 51, une unité de traitement 52 équipée par exemple d'un microprocesseur, et pilotée par le programme d'ordinateur 53, mettant en œuvre le procédé selon l'invention. Dans au moins un mode de réalisation, l'invention est mise en œuvre sous la forme d'une application installée sur un dispositif de communication en possession de l'utilisateur et/ou par l'intermédiaire d'un dispositif dédié uniquement au traitement de preuve numérique. Un tel dispositif convoyeur de preuve numérique comprend :
- Des moyens de réception, en provenance d'un composeur, de ladite preuve numérique ; ces moyens peuvent se présenter sous la forme d'une interface sans fil de type NFC ou encore sous la forme d'une interface filaire de connexion au réseau de communication ou bien encore sous la forme d'une caméra et d'une application apte à scanner des codes bidimensionnels de stockage de données ;
- Des moyens d'identification, au sein de la preuve numérique obtenue, d'identifiant de sous ensemble de destinataires de la preuve numérique ; et
- Des moyens de sélection d'un destinataire courant, dont l'identifiant appartient à la liste d'identifiants dudit au moins un sous ensemble de l'ensemble de destinataires.

Ces moyens se présentent sous la forme d'une application logicielle spécifique, ou encore sous la forme de composants matériels dédiés construits en vue de la réalisation de ces fonctions, tel qu'un élément de sécurisation (SE) ou un environnement d'exécution sécurisé. L'élément de sécurisation peut se présenter sous la forme d'une carte Sim, USim, UICC, ou encore un composant de sécurité spécifique.

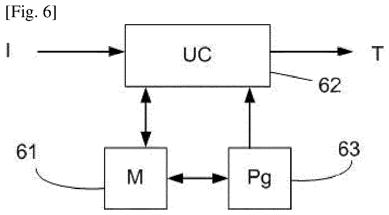

On présente, en relation avec la [Fig.6], une architecture simplifiée d'un dispositif destinataire de preuve numérique apte à mettre en œuvre la méthode de traitement de preuve numérique telle que présentée précédemment. Un tel dispositif destinataire de preuve numérique comprend une mémoire 61, une unité de traitement 62 équipée par exemple d'un microprocesseur, et pilotée par le programme d'ordinateur 63, mettant en œuvre le procédé selon l'invention. Dans au moins un mode de réalisation, l'invention est mise en œuvre sous la forme d'une application installée sur un dispositif de communication en possession d'une entité, tel qu'un commerçant et/ou par l'intermédiaire d'un dispositif dédié uniquement à la réception et à la consommation de preuve numérique. Un tel dispositif destinataire de preuve numérique comprend par exemple tout ou partie des moyens suivants :
- des moyens de réception, en provenance du convoyeur, d'un identifiant de convoyeur, par exemple par l'intermédiaire d'une interface sans contact ou d'une interface filaire ;
- des moyens de réception, en provenance du convoyeur, du fichier de preuve numérique, par exemple par l'intermédiaire d'une interface sans contact ou d'une interface filaire ;
- des moyens de recherche, au sein du fichier de preuve numérique reçu, de son identifiant de destinataire courant ; et des moyens de vérification de la conformité de cet identifiant de destinataire courant avec son identifiant de référence, conduisant, en cas de validité de la vérification, à une prise en charge du fichier de preuve numérique ; en cas de vérification erronée, des moyens de refus de la preuve numérique et une terminaison du processus, se présentant par exemple sous la forme d'un affichage d'une erreur à destination du convoyeur ou encore sous la forme d'une transmission d'un message d'absence de prise en charge par l'intermédiaire du réseau de communication ;
- des moyens de transmission, au composeur, d'un identifiant du certificat numérique, en utilisant un réseau de communication et son interface de transmission de données ;
- des moyens de réception d'une donnée d'interblocage en provenance du composeur ;
- des moyens de validation des données contenues dans le fichier de preuve numérique en fonction des matériels cryptographiques à sa destinataire ; et
- des moyens de suppression de la preuve numérique après validation, comprenant des moyens de transmission de la validation de la preuve numérique et des moyens de marquage, au sein de la base de données de la validation effectuée par le destinataire, entrainant une impossibilité d'utilisation nouvelle de la preuve numérique par le destinataire ou un autre destinataire.

Ces moyens se présentent sous la forme d'une application logicielle spécifique, ou encore sous la forme de composants matériels dédiés construits en vue de la réalisation de ces fonctions, tel qu'un élément de sécurisation (SE) ou un environnement d'exécution sécurisé. L'élément de sécurisation peut se présenter sous la forme d'une carte Sim, USim, UICC, ou encore un composant de sécurité spécifique.

## Revendications

1. Procédé de traitement d'une preuve numérique de validation d'une transaction électronique, procédé mis en œuvre au sein d'un système comprenant un dispositif électronique de construction de la preuve numérique, appelé composeur, ladite preuve numérique étant destinée à être transmise à un dispositif électronique de traitement de la preuve numérique, appelé destinataire appartenant à un ensemble de destinataires, le destinataire de traitement de la preuve numérique étant sélectionné par une entité tierce nommée convoyeur, le procédé comprenant les étapes suivantes :
- Une étape de construction de la preuve numérique, par le composeur, à l'issue d'une étape d'exécution de la transaction électronique par le composeur, ladite preuve numérique comprenant au moins un certificat numérique qui comprend une liste d'identifiants d'au moins un sous ensemble de l'ensemble de destinataires ;
- Une étape de transmission, au convoyeur, de ladite preuve numérique ;
- Une étape de sélection, par le convoyeur, d'un destinataire courant dont l'identifiant appartient à la liste d'identifiants dudit au moins un sous ensemble de l'ensemble de destinataires ; et
- Une étape de validation, par le destinataire courant, de la preuve numérique remise par le convoyeur.

2. Procédé de traitement de la preuve numérique de réalisation de la transaction électronique selon la revendication 1, **caractérisé en ce que** l'étape de construction de la preuve numérique, par le composeur, comprend :
- une étape de réception (A10), par un module d'exécution sécurisé du composeur, d'un identifiant (IdU) du convoyeur ;
- une étape d'obtention (A20), par le module d'exécution sécurisé du composeur, à partir d'une base de données (DB0), d'un profil (PIdU) associé audit identifiant (IdU) ;
- une étape de détermination (A30), à partir dudit profil, d'un ensemble d'identifiants (EIdB) de destinataires auxquels la preuve numérique est potentiellement destinée ;
- une étape de construction (A40), par le module d'exécution sécurisé du composeur, d'un certificat numérique (CertN) comprenant l'identifiant (IdU), l'ensemble d'identifiants (EIdB) des destinataires, un nombre aléatoire (NoXC), ledit certificat numérique (CertN) étant chiffré à l'aide de la clé privée (PriKey) du module d'exécution sécurisé du composeur ;
- une étape de construction (A50) de la preuve numérique (PrN), comprenant le certificat numérique (CertN) et comprenant notamment l'identifiant dudit convoyeur, l'ensemble d'identifiants des destinataires du certificat numérique et l'identifiant du composeur ;
- une étape de transmission (A60) de la preuve numérique (PrN) à destination du convoyeur ;
- une étape d'insertion (A70) de la preuve numérique au sein d'une base de données (DB1) comprenant des enregistrements de preuves numériques.

3. Procédé selon la revendication 2, **caractérisé en ce que** l'étape de construction du certificat numérique CertN comprend une étape de chiffrement de l'ensemble des d'identifiants (EIdB) des destinataires à l'aide de la clé privée du module d'exécution sécurisé du composeur.

4. Procédé selon la revendication 2, **caractérisé en ce que** le certificat numérique CertN comprend en outre une date limite de validité.

5. Procédé selon la revendication 2, **caractérisé en ce que** le certificat numérique CertN est signé à l'aide de la clé publique (PubKey) du module d'exécution sécurisé du composeur.

6. Procédé de traitement de la preuve numérique de réalisation de la transaction électronique selon la revendication 1, **caractérisé en ce que** l'étape de validation, par le destinataire courant, de la preuve numérique remise par le convoyeur, comprend :
- une étape de réception (B10), en provenance du convoyeur, d'un identifiant de convoyeur (IdUX) ;
- une étape de réception (B20), en provenance du convoyeur, d'un fichier de preuve numérique (PrN) ;
- une étape de recherche (B30), par le destinataire courant, au sein du fichier de preuve numérique, d'un identifiant du destinataire courant (IDc) ; et une vérification de la conformité de cet identifiant de destinataire courant (IDc) avec un identifiant de référence (IDr) du destinataire courant, conduisant, en cas de validité de la vérification (Y), à une prise en charge du fichier de preuve numérique (PrN) ; en cas de vérification erronée (N), une étape de refus de la preuve numérique et une terminaison du processus ;
- une étape de transmission (B40), par le destinataire courant, au composeur ComP, d'un identifiant du certificat numérique ;
- une étape de réception (B50) d'une donnée d'interblocage (IBK) ;
- une étape de validation (B60) des données contenues dans le fichier de preuve numérique en fonction des matériels cryptographiques à disposition du destinataire ; et
- une étape de suppression de la preuve numérique après validation.

7. Procédé de traitement de la preuve numérique de réalisation de la transaction électronique selon la revendication 6 **caractérisé en ce que** l'étape de suppression de la preuve numérique comprend :
- une étape de transmission de la validation de la preuve numérique par le destinataire ;
- et une étape de marquage, par le composeur, au sein d'une base de données (DB1) de la validation effectuée par le destinataire courant, entrainant une impossibilité d'utilisation nouvelle de la preuve numérique par le destinataire ou un autre destinataire.

8. Système de traitement d'une preuve numérique de validation d'une transaction électronique, comprenant un dispositif électronique de construction de la preuve numérique, appelé composeur, un dispositif électronique de traitement de la preuve numérique, appelé destinataire appartenant à un ensemble de destinataires, et une entité tierce nommée convoyeur, un ladite preuve numérique étant destinée à être transmise au destinataire par le convoyeur, le système comprenant :
- Des moyens de construction de la preuve numérique, par le composeur, à l'issue d'une d'exécution de la transaction électronique par le composeur, ladite preuve numérique comprenant au moins un certificat numérique qui comprend une liste d'identifiants d'au moins un sous ensemble de l'ensemble de destinataires ;
- Des moyens de transmission, par le composeur, au convoyeur, de ladite preuve numérique ;
- Des moyens de sélection, par le convoyeur, d'un destinataire courant dont l'identifiant appartient à la liste d'identifiants dudit au moins un sous ensemble de l'ensemble de destinataires ; et
- Des moyens de validation, par le destinataire courant, de la preuve numérique remise par le convoyeur.

9. Produit programme d'ordinateur comprenant des instructions de code de programme pour la mise en œuvre d'un procédé de communication selon la revendication 1, lorsqu'il est exécuté par un processeur.

## Patentansprüche

1. Verfahren zur Verarbeitung eines digitalen Beweises zur Validierung einer elektronischen Transaktion, wobei das Verfahren innerhalb eines Systems implementiert ist, das eine elektronische Vorrichtung zum Erstellen des digitalen Beweises, den sogenannten Verfasser, umfasst, wobei der digitale Beweis dazu bestimmt ist, an eine elektronische Vorrichtung zur Verarbeitung des digitalen Beweises, den sogenannten Empfänger, übertragen zu werden, der zu einer Gruppe von Empfängern gehört, wobei der Empfänger für die Verarbeitung des digitalen Beweises von einer dritten Stelle, dem sogenannten Übermittler, ausgewählt wird, wobei das Verfahren die folgenden Schritte umfasst:
- Einen Schritt zum Erstellen des digitalen Beweises durch den Verfasser nach Abschluss eines Schritts zum Ausführen der elektronischen Transaktion durch den Verfasser, wobei der digitale Beweis mindestens ein digitales Zertifikat umfasst, das eine Liste von Identifikatoren mindestens einer Untergruppe der Gruppe von Empfängern umfasst;
- einen Schritt des Übertragens des digitalen Beweises an den Übermittler;
- einen Schritt des Auswählens eines aktuellen Empfängers durch den Übermittler, dessen Identifikator zu der Liste von Identifikatoren der mindestens einen Untergruppe der Gruppe von Empfängern gehört; und
- einen Schritt des Validierens des vom Übermittler ausgestellten digitalen Beweises durch den aktuellen Empfänger.

2. Verfahren zur Verarbeitung des digitalen Beweises über den Abschluss der elektronischen Transaktion gemäß Anspruch 1, **dadurch gekennzeichnet, dass** der Schritt des Erstellens des digitalen Beweises durch den Ersteller umfasst:
- einen Schritt (A10) des Empfangens einer Kennung (IdU) des Übermittlers durch ein sicheres Ausführungsmodul des Verfassers;
- einen Schritt (A20) des Abrufens eines mit dieser Kennung (IdU) verknüpften Profils (PIdU) aus einer Datenbank (DBO) durch das sichere Ausführungsmodul des Verfassers;
- einen Schritt (A30) des Bestimmens einer Reihe von Identifikatoren (EldB) von Empfängern, für die der digitale Beweis potenziell bestimmt ist, aus dem Profil;
- einen Schritt (A40) zum Erstellen eines digitalen Zertifikats (CertN) durch das sichere Ausführungsmodul des Verfassers, das die Kennung (IdU), die Menge von Kennungen (EldB) der Empfänger und eine Zufallszahl (NoXC) umfasst, wobei das digitale Zertifikat (CertN) unter Verwendung des privaten Schlüssels (PriKey) des sicheren Ausführungsmoduls des Verfassers verschlüsselt wird;
- einen Schritt (A50) zum Erstellen des digitalen Beweises (PrN), der das digitale Zertifikat (CertN) umfasst und insbesondere die Kennung des Übermittlers, die Menge der Kennungen der Empfänger des digitalen Zertifikats und die Kennung des Verfassers umfasst;
- einen Schritt (A60) zum Übertragen des digitalen Beweises (PrN) an den Übermittler;
- einen Schritt (A70) zum Einfügen des digitalen Beweises in eine Datenbank (DB1), die digitale Beweisdatensätze umfasst.

3. Verfahren nach Anspruch 2, **dadurch gekennzeichnet, dass** der Schritt des Erstellens des digitalen Zertifikats CertN einen Schritt des Verschlüsselns aller Identifikatoren (EldB) der Empfänger unter Verwendung des privaten Schlüssels des sicheren Ausführungsmoduls des Verfassers umfasst.

4. Verfahren nach Anspruch 2, **dadurch gekennzeichnet, dass** das digitale Zertifikat CertN ferner ein Gültigkeitsenddatum umfasst.

5. Verfahren nach Anspruch 2, **dadurch gekennzeichnet, dass** das digitale Zertifikat CertN unter Verwendung des öffentlichen Schlüssels (Pub Key) des sicheren Ausführungsmoduls des Verfassers signiert wird.

6. Verfahren zur Verarbeitung des digitalen Beweises über den Abschluss der elektronischen Transaktion gemäß Anspruch 1, **dadurch gekennzeichnet, dass** der Schritt der Validierung des vom Übermittler ausgestellten digitalen Beweises durch den aktuellen Empfänger umfasst:
- einen Schritt (B10) des Empfangens einer Übermittlerkennung (IdUX) vom Übermittler;
- einen Schritt (B20) des Empfangs einer digitalen Beweisdatei (PrN) vom Übermittler;
- einen Schritt (B30) des Suchens einer Kennung des aktuellen Empfängers (IDc) in der digitalen Beweisdatei durch den aktuellen Empfänger; und des Überprüfens der Übereinstimmung dieser aktuellen Empfängerkennung (IDc) mit einer Referenzkennung (IDr) des aktuellen Empfängers, was im Falle der Gültigkeit der Überprüfung (Y) dazu führt, dass die digitale Beweisdatei (PrN) verarbeitet wird; im Falle einer fehlerhaften Überprüfung (N) ein Schritt des Zurückweisens des digitalen Beweises und des Beendens des Prozesses;
- einen Schritt (B40), bei dem der aktuelle Empfänger eine Kennung des digitalen Zertifikats an den Verfasser ComP übermittelt;
- einen Schritt (B50) des Empfangs von Deadlock-Daten (IBK);
- einen Schritt (B60) zum Validieren der in der digitalen Beweisdatei enthaltenen Daten anhand des dem Empfänger zur Verfügung stehenden kryptografischen Materials; und
- einen Schritt zum Löschen des digitalen Beweises nach der Validierung.

7. Verfahren zur Verarbeitung des digitalen Beweises über den Abschluss der elektronischen Transaktion gemäß Anspruch 6, **dadurch gekennzeichnet, dass** der Schritt des Löschens des digitalen Beweises umfasst:
- einen Schritt zum Übertragen der Validierung des digitalen Beweises durch den Empfänger;
- und einen Schritt des Markierens der vom aktuellen Empfänger durchgeführten Validierung durch den Verfasser in einer Datenbank (DB1), was dazu führt, dass eine Wiederverwendung des digitalen Beweises durch den Empfänger oder einen anderen Empfänger unmöglich ist.

8. System zur Verarbeitung eines digitalen Beweises zur Validierung einer elektronischen Transaktion, umfassend eine elektronische Vorrichtung zum Erstellen des digitalen Beweises, den sogenannten Verfasser, eine elektronische Vorrichtung zur Verarbeitung des digitalen Beweises, den sogenannten Empfänger, der zu einer Gruppe von Empfängern gehört, und eine dritte Partei, den sogenannten Übermittler, wobei der digitale Beweis dazu bestimmt ist, vom Übermittler an den Empfänger übertragen zu werden, wobei das System umfasst:
- Mittel zum Erstellen des digitalen Beweises durch den Verfasser nach Abschluss der Ausführung der elektronischen Transaktion durch den Verfasser, wobei der digitale Beweis mindestens ein digitales Zertifikat umfasst, das eine Liste von Identifikatoren mindestens einer Untergruppe der Gruppe von Empfängern umfasst;
- Mittel zum Übertragen des digitalen Beweises durch den Verfasser an den Übermittler;
- Mittel zum Auswählen eines aktuellen Empfängers durch den Übermittler, dessen Identifikator zu der Liste von Identifikatoren der mindestens einen Teilmenge der Menge von Empfängern gehört; und
- Mittel zum Validieren des vom Übermittler ausgestellten digitalen Beweises durch den aktuellen Empfänger.

9. Ein Computerprogrammprodukt, das Programmcodeanweisungen zum Implementieren eines Kommunikationsverfahrens gemäß Anspruch 1 umfasst, wenn es von einem Prozessor ausgeführt wird.

## Claims

1. A method for processing a digital proof for validating an electronic transaction, the method implemented within a system comprising an electronic device for constructing the digital proof, so-called the composer, said digital proof being intended to be transmitted to an electronic device for processing the digital proof, so-called the recipient, belonging to a set of recipients, the digital proof processing recipient being selected by a third-party entity, so-called the conveyor, the method comprising the following steps:
- A step of constructing, by the composer, the digital proof upon completion of a step of executing the electronic transaction by the composer, said digital proof comprising at least one digital certificate which comprises a list of identifiers of at least one subset of the set of recipients;
- A step of transmitting said digital proof to the conveyor;
- A step of selecting, by the conveyor, a current recipient whose identifier belongs to the list of identifiers of said at least one subset of the set of recipients; and
- A step of validating, by the current recipient, the digital proof issued by the conveyor.

2. The method for processing the digital proof of completion of the electronic transaction according to claim 1, **characterized in that** the step of constructing the digital proof, by the composer, comprises:
- a step (A10) of receiving, by a secure execution module of the composer, an identifier (IdU) of the conveyor;
- a step (A20) of obtaining, by the secure execution module of the composer, from a database (DBO), a profile (PIdU) associated with said identifier (IdU);
- a step (A30) of determining, from said profile, a set of identifiers (EldB) of recipients to which the digital proof is potentially intended;
- a step (A40) of constructing, by the secure execution module of the composer, a digital certificate (CertN) comprising the identifier (IdU), the set of identifiers (EldB) of the recipients, a random number (NoXC), said digital certificate (CertN) being encrypted using the private key (PriKey) of the secure execution module of the composer;
- a step (A50) of constructing the digital proof (PrN), comprising the digital certificate (CertN) and comprising in particular the identifier of said conveyor, the set of identifiers of the recipients of the digital certificate and the identifier of the composer;
- a step (A60) of transmitting the digital proof (PrN) to the conveyor;
- a step (A70) of inserting the digital proof within a database (DB1) comprising digital proof records.

3. The method according to claim 2, **characterized in that** the step of constructing the digital certificate CertN comprises a step of encrypting all of the identifiers (EldB) of the recipients using the private key of the secure execution module of the composer.

4. The method according to claim 2, **characterized in that** the digital certificate CertN further comprises a validity limit date.

5. The method according to claim 2, **characterized in that** the digital certificate CertN is signed using the public key (Pub Key) of the secure execution module of the composer.

6. The method for processing the digital proof of completion of the electronic transaction according to claim 1, **characterized in that** the step of validating, by the current recipient, the digital proof issued by the conveyor, comprises:
- a step (B10) of receiving, from the conveyor, a conveyor identifier (IdUX);
- a step (B20) of receiving, from the conveyor, a digital proof file (PrN);
- a step (B30) of searching, by the current recipient, within the digital proof file, an identifier of the current recipient (IDc); and checking the compliance of this current recipient identifier (IDc) with a reference identifier (IDr) of the current recipient, leading, in case of validity of the verification (Y), to the digital proof file (PrN) being handled; in case of erroneous verification (N), a step of rejecting the digital proof and terminating the process;
- a step (B40) of transmitting, by the current recipient, to the composer ComP, an identifier of the digital certificate;
- a step (B50) of receiving a deadlock data (IBK);
- a step (B60) of validating the data contained in the digital proof file according to the cryptographic material available to the recipient; and
- a step of deleting the digital proof after validation.

7. The method for processing the digital proof of completion of the electronic transaction according to claim 6, **characterized in that** the step of deleting the digital proof comprises:
- a step of transmitting the validation of the digital proof by the recipient;
- and a step of marking, by the composer, within a database (DB1) the validation performed by the current recipient, resulting in an impossibility of re-use of the digital proof by the recipient or another recipient.

8. A system for processing a digital proof for validating an electronic transaction, comprising an electronic device for constructing the digital proof, so-called the composer, an electronic device for processing the digital proof, so-called the recipient, belonging to a set of recipients, and a third-party entity, so-called the conveyor, said digital proof being intended to be transmitted to the recipient by the conveyor, the system comprising:
- Means for constructing, by the composer, the digital proof upon completion of an execution of the electronic transaction by the composer, said digital proof comprising at least one digital certificate which comprises a list of identifiers of at least one subset of the set of recipients;
- Means for transmitting, by the composer, said digital proof to the conveyor;
- Means for selecting, by the conveyor, a current recipient whose identifier belongs to the list of identifiers of said at least one subset of the set of recipients; and
- Means for validating, by the current recipient, the digital proof issued by the conveyor.

9. A computer program product comprising program code instructions for implementing a communication method according to claim 1, when executed by a processor.
